# EUROPEAN PATENT APPLICATION

(11) **EP 3 401 045 A1**
(43) Date of publication of application: **14.11.2018**
(21) Application number: 18165640.6
(22) Date of filing: 04.04.2018
(51) Int. Cl.: B23C 5/10, B23C 3/12

(54) **MILLING CUTTER WITH REPLACEABLE CUTTING HEAD**

(30) Priority: 05.05.2017 TW 106114872; 10.07.2017 TW 106123082
(71) Applicant: Chang, Hsin-Tien, Taichung City (TW)
(72) Inventor: Chang, Hsin-Tien, Taichung City (TW)
(74) Representative: Viering, Jentschura & Partner mbB Patent- und Rechtsanwälte

(57) **Abstract**

An indexable mill includes a tool holder (10) and an indexable bit (20). The tool holder (10) has a positioning shaft (11) whose one side is provided with a braking block (12) that has curved mortises (121). The positioning shaft (11) is centrally provided with a threaded hole (13). The indexable bit (20) is centrally provided with a positioning hole (22). The positioning hole (22) of the indexable bit (20) has its one side formed with a braking notch (24). The plug-socket like connection between the positioning shaft (11) of the tool holder (10) and the positioning hole (22) of the indexable bit (20) provides a first positioning function. The wrapping, curved surface contact between the braking block (12) and the braking notch (24) provides a second positioning function. The dual positioning enhances stability and rigidity of the combination.

## Description

### FIELD OF THE INVENTION

The present invention relates to improvements in indexable mills, and more particularly to an indexable mill for burring, trimming, and chamfering workpieces.

### BACKGROUND OF THE INVENTION

Generally, workpieces formed using stamping, die-casting or casting can have local overflow of material at their sides corresponding to the joint of molds as burrs due to many reasons, such as excessive pressure, worn molds, overheat and poor registering. When such defects when going beyond a threshold of acceptability need to be removed. For removing burrs, the common solution is to wear out them manually using an emery wheel or a blasting machine. However, both polishing and blasting can generate considerable noise and dust that contaminates the working environment and requires additional equipment such as operators' dust-proof gears and air cleaning devices, making the manufacturing costs increased. Besides, polishing using emery wheels is dangerous because the peel sands of the emery wheel and burr scraps can scatter in high speed and hurt operators, making this work often short-handed even with attractive pay. Additionally, manual polishing or blasting is unstable in both quality and output. This makes some dealers try to use robotic devices to replace human operation.

However, such robotic devices usually require high initial investment, and are less cost-efficient unless in a mass manufacturing setting. Besides, even if the foregoing polishing or blasting operation is conducted by machinery instead of human, it is nothing more than a solution to workforce, leaving the problems about tough working environment and containment unsolved. Hence, for small-scale production, manual polishing or blasting still have extensive use.

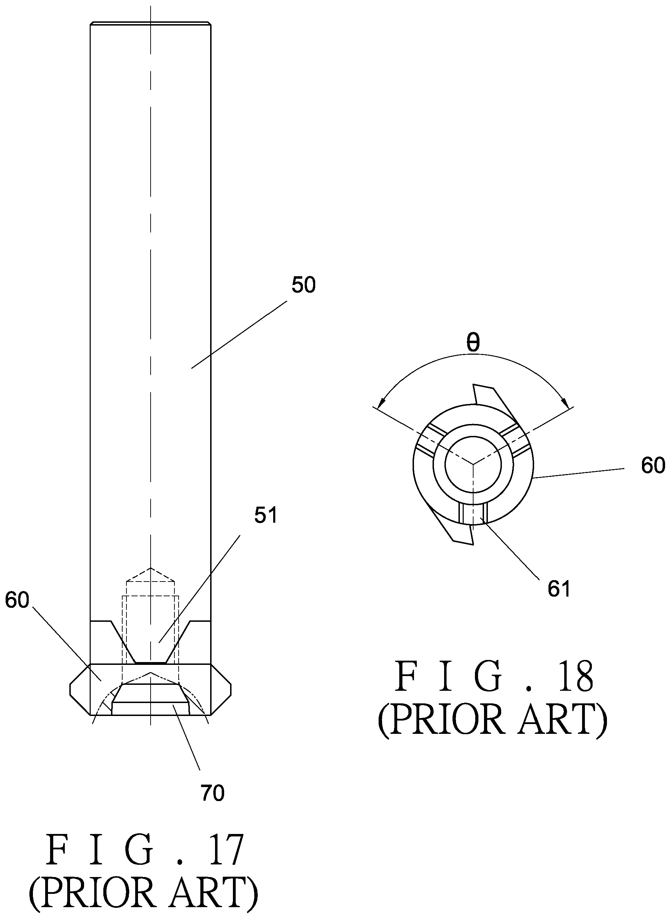

Referring to FIG. 17 and FIG. 18, a conventional indexable chamfer mill primarily comprises a tool holder 50 and an indexable chamfer bit 60 that are fastened by a screw 70 at the end surface. The tool holder 50 has its end surface peripherally provided with three trapezoid tenons 51. The adjacent trapezoid tenons 51 are separated by 120°. Similarly, the indexable chamfer bit 60 has its end surface correspondingly provided with three trapezoid mortises 61 separated by 120°. The mutual engagement between the trapezoid tenons 51 of the tool holder 50 and the trapezoid mortises 61 of the indexable chamfer bit 60 provides alignment and interlinking.

Referring to FIG. 18, the trapezoid tenon 51 of the tool holder 50 and the trapezoid mortises 61 of the indexable chamfer bit 60 are both arranged with a separation angle θ of 120°. During manufacturing, tolerance can accumulate and the larger the angular tolerance is, the greater the accumulative total is. When the deviation of accuracy is accumulated to an extent, the trapezoid tenons 51 and the trapezoid mortise 61 are prevented from tight combination, and consequently, the tool holder 50 and the indexable chamfer bit 60 are prevented from firm connection.

In addition, since the trapezoid tenons 51 and the trapezoid mortises 61 are of a trapezoid shape, which is particularly subject to angular deviation during production, and once the deviation exits, precisely assembling is impossible.

Therefore, for minimizing the accumulative tolerance and achieving tight combination, the trapezoid tenons 51 and the trapezoid mortises 61 must be processed using high-precision machine tools. This means that the production speed and in turn the output are limited, and the manufacturing costs are increased.

Moreover, since the tool holder 50 and the indexable chamfer bit 60 are combined using fit between the three trapezoid tenons 51 and the threes trapezoid mortises 61, such multiple fit not only increases manufacturing costs, but also may lead to excessive positioning and limit.

Since the precise fit of the trapezoid tenons and the trapezoid mortises requires minimized tolerance and in turn highly accurate production, the size of the tool is limited. This means that the prior-art device has its lower limit in terms of workpieces it can chamfer. Currently, for round holes, only those larger than 11mm can be chamfered in this way.

### SUMMARY OF THE INVENTION

Conventionally, burring casts has been conducted manually using polishing or blasting, so the working environment is tough, making the quality and output of the products unstable. During operation, the peel sands of the emery wheel and burr scraps can scatter in high speed and hurt operators, making the work too dangerous and unhealthy for people to take and leading a high turnover rate. Even if the machinery alternative is used, it is nothing more than a solution to workforce, and is unable to reduce or improve the problems about containment to the environment. Besides, in addition to a screw fastening the conventional indexable chamfer mill, tool holder and indexable chamfer bit, an additional engaging means includes three 120°-separated trapezoid tenons peripherally formed on the end surface of the tool holder of the chamfer mill and three corresponding 120°-separated trapezoid mortises peripherally formed on the end surface of the indexable chamfer bit for alignment and interlinking. Accumulative tolerance can generated during manufacturing of these trapezoid tenons and trapezoid mortises, and the larger the angular tolerance is, the greater the accumulative total is. When the accumulative total is great to an extent, the fit between the trapezoid tenons and the trapezoid mortise can have serious deviation.

The disclosed indexable mill comprises a tool holder, having one end thereof provided with a positioning shaft, wherein the positioning shaft has one side thereof provided with a braking block, and the positioning shaft is centrally formed with a threaded hole; and an indexable bit is centrally provided with a positioning hole and a through hole, the positioning hole being configured to receive the positioning shaft, the positioning hole of the indexable bit having one side thereof formed with a gap, the gap forming a braking notch, the braking block and the braking notch being in plug-socket like connection, and the through hole being configured to receive a screw bolt that fixes the indexable bit to the tool holder.

The plug-socket like connection between the positioning shaft of the tool holder and the positioning hole of the indexable bit provides a first positioning function. The wrapping, curved surface contact between the braking block and the braking notch provides a second positioning function. The dual positioning enhances stability and rigidity of the combination.

Preferably, the tool holder has the end thereof provided with a core, and the positioning shaft is deposited on the core, in which the core is configured to be inserted into an edge following wheel and the indexable bit, and the screw bolt fixes the core. The present invention replaces polishing with milling, thereby reducing contamination in the working environment, and being suitable for both large- and small-scale production. The edge following wheel rolls along the profile of the cast or workpiece to the tool is working on, so the indexable bit is led to move along the parting line on the cast or workpiece to trim burrs, making the present invention practical and inventive.

### BRIEF DESCRIPTION OF THE DRAWINGS

FIG. 1 is an exploded view of the present invention.
FIG. 2 is a side schematic drawing of the present invention.
FIG. 3 is a top view of an indexable bit of the present invention.
FIG. 4 is an exploded view of one embodiment of the present invention for trimming workpieces.
FIG. 5 is a cross-sectional view of the workpieces-trimming embodiment of the present invention.
FIG. 6 is a cross-sectional view of one embodiment of the present invention for chamfering workpieces.
FIG. 7 showing the edge following wheel and the indexable bit assembled in a reversed order.
FIG. 8 is a schematic drawing showing the edge following wheel is mounted with a bushing.
FIG. 9 is a schematic drawing showing the edge following wheel is mounted with a different bushing.
FIG. 10 is schematic drawing showing that the present invention mills a burr on a cast.
FIG. 11 is a partial, enlarged view of FIG. 10.
FIG. 12 schematically shows a profile of a cast.
FIG. 13 schematically shows the guide path of the present invention.
FIG. 14 schematically shows the milling path of the indexable bit of the present invention.
FIG. 15 is schematic drawing showing that the present invention conducts chamfering.
FIG. 16 schematically shows a conventional braking notch with straight sides.
FIG. 17 is schematic drawing of a conventional indexable chamfering tool.
FIG. 18 is a top view of the conventional indexable chamfering tool.

### DETAILED DESCRIPTION OF THE PREFERRED EMBODIMENTS

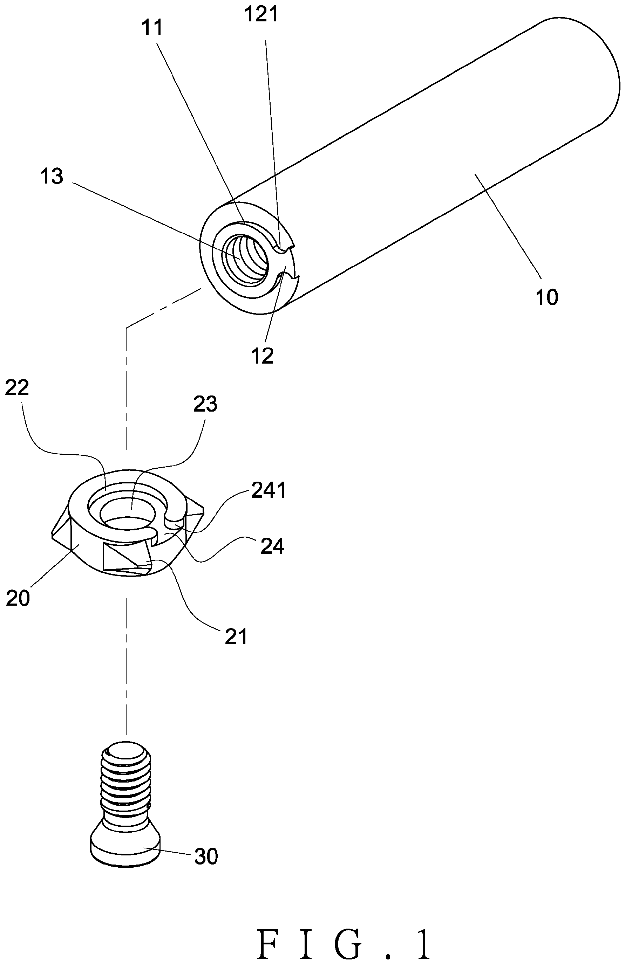

Referring to FIGs. 1 through 3, an indexable mill of the present invention comprises a tool holder 10 and an indexable bit 20.

The tool holder 10 has its one end provided with a positioning shaft 11. The positioning shaft 11 has its one side provided with a braking block 12. The braking block 12 has its two sides formed as curved mortises 121. The positioning shaft 11 is centrally formed with a threaded hole 13.

The indexable bit 20 has its main body peripherally provided with more than one chamfer blade 21. The indexable bit 20 is centrally formed with a positioning hole 22 and a through hole. The through hole is a countersunk hole 23. The positioning hole 22 is configured to receive and thereby align and position the positioning shaft 11. The positioning hole 22 of the indexable bit 20 has a gap at its one side. The gap forms a braking notch 24. The braking notch 24 has its two sides formed as curved tenons 241 for increased contact area and functions of positioning, retaining and interlinking. The countersunk hole 23 is configured to receive a screw bolt 30 that fixes the indexable bit 20 to the tool holder 10.

Referring to FIGs. 1 through 3, during assembly of the tool holder 10 and the indexable bit 20, the positioning shaft 11 of the tool holder 10 is inserted into the positioning hole 22 of the indexable bit 20 so as to achieve rapid positioning. There is only a small interval (about 0.01mm) between the positioning shaft 11 and the positioning hole 22, so as to prevent the indexable bit 20 from swinging with respect to the tool holder 10. Particularly, during machining operation, the tight combination between the two parts facilitates improving the rigidity of the tool holder 10 and eliminating vibration.

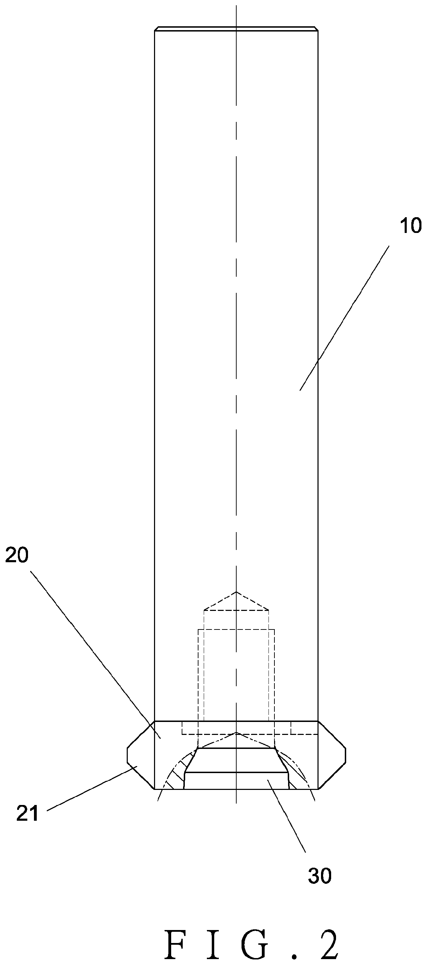

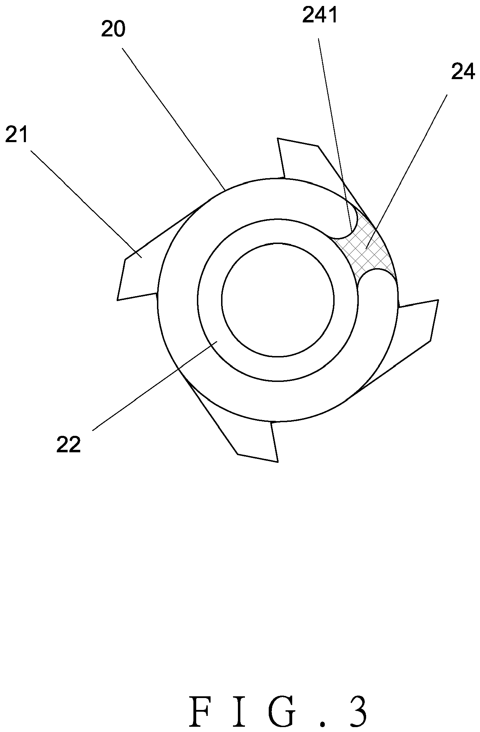

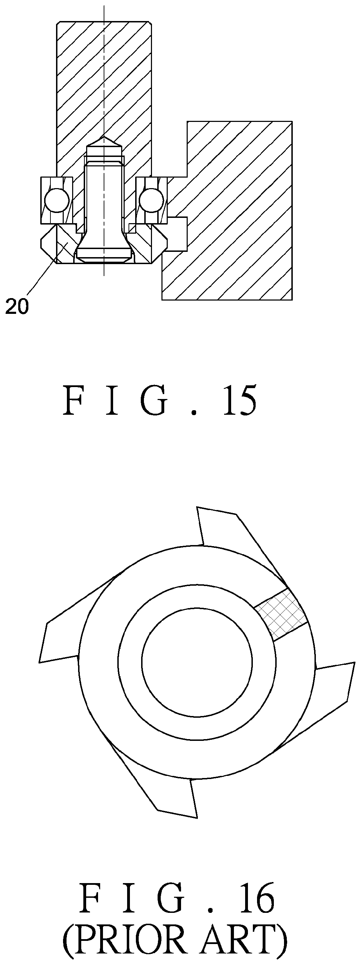

Referring to FIGs. 1, 3 and 16, the tool holder 10 and the indexable bit 20 are interlinked in virtue of the plug-socket like connection between the braking block 12 of the tool holder 10 and the braking notch 24 of the indexable bit 20, and the torque of the tool is also generated due to the interaction between the braking block 12 and the braking notch 24. Since the braking block 12 and the braking notch 24 have their two sides formed as curved mortises 121 and curved ends, respectively, the extended area contributed by the curves increases the area of the shearing force of the braking block 12, thereby enhancing the torque of the tool holder 10. Referring to FIG. 3, the grid at the braking notch 24 indicates the area of the braking block 12. As compared to the grid area defined by the conventional braking block with straight sides as shown in FIG. 16, the present invention provide a larger contact area. As compared to the shearing force area provided by the conventional braking block with straight sides as shown in FIG. 16, the braking block 12 with the curved mortises 121 provides a larger area. In the embodiment shown in FIG. 2, the tool holder 10 of the present invention is used to receive a chamfer mill for machining a 5mm round hole (meaning that the tool can be inserted into the bottom of a 5mm round hole for bottom chamfering). A ratio of the area of the braking block 12 (grid area) to the area of the braking block with straight sides (grid area) is 1.27:1.01. This allows the present invention to effectively increase the shearing force area by 25.7%, thereby increasing torque equally and enhancing the rigidity of the chamfer mill. With this feature, the chamfer mill can be downsized, and can be used to chamfer small bores or slots with various shapes (e.g. a T-shape slot) right after formation of the bores or slots without a separate chamfering operation outside a machine tool (or machining center). This can not only streamline the process, reduce the processing time, and save repeated assembling/disassembling operations, but also improve the machining accuracy on workpieces.

The curved surface contact between the braking block 12 and the braking notch 24 provides a second positioning function. The curved mortises 121 of the braking block 12 embrace and limit the tenons 241 of the braking notch 24, so mutual containment formed between the braking block 12 and the braking notch 24, thereby securing the indexable bit 20 and the tool holder 10 in the form of plug-socket like connection. When working with the positioning between the positioning shaft 11 and the positioning hole 22, the second positioning function contributes to dual positioning, high combination rigidity and low vibration. The dual positioning eliminates problems associated with excessive limit or excessive positioning. The point is that the positioning shaft 11 and the curved mortise 121 at the two sides of the braking block 12 of the tool holder 10 can be formed with a single tool in one operation, and the positioning hole 22 and the curved tenons 241 at the two sides of the braking notch 24 of the indexable bit 20 can be also formed with a single tool in one operation, thereby minimizing accumulation of tolerance and ensuring high machining accuracy.

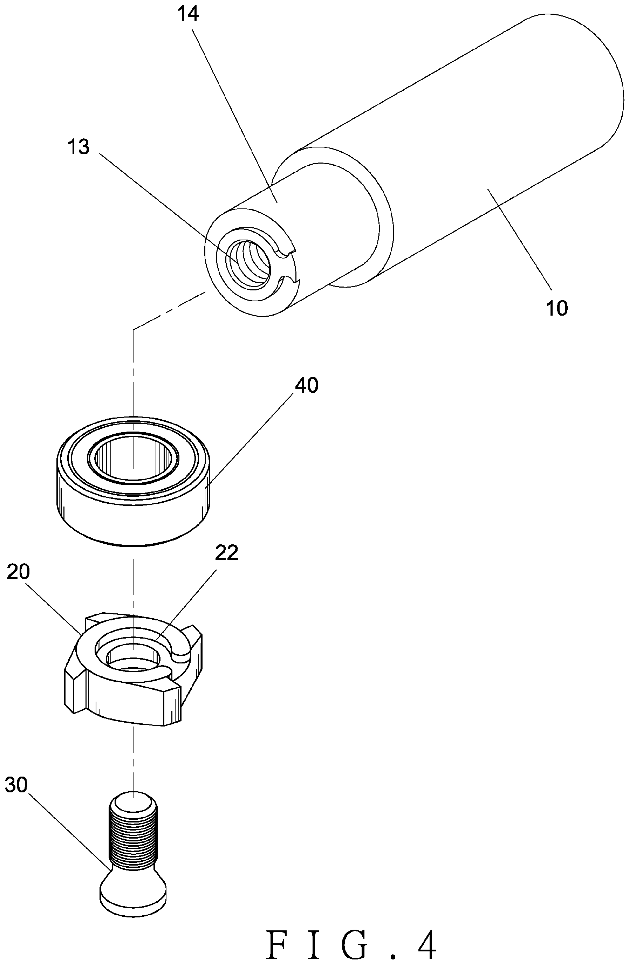

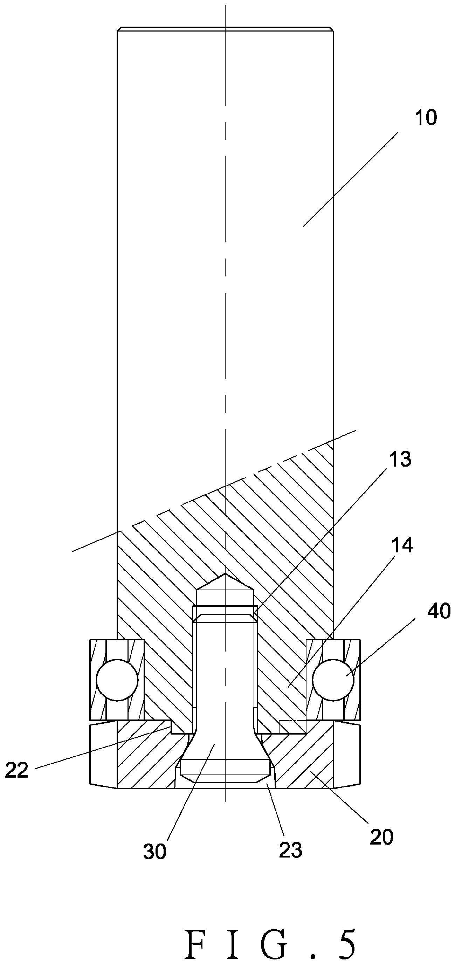

Referring to FIGs. 4 and 5, in the depicted embodiment, the present invention is used to trim workpieces. It comprises a tool holder 10. The tool holder 10 has its front end provided with a core 14 to be inserted into an edge following wheel 40 and an indexable bit 20. The core 14 has its end surface provided with a threaded hole 13 for a screw bolt 30 to screw.

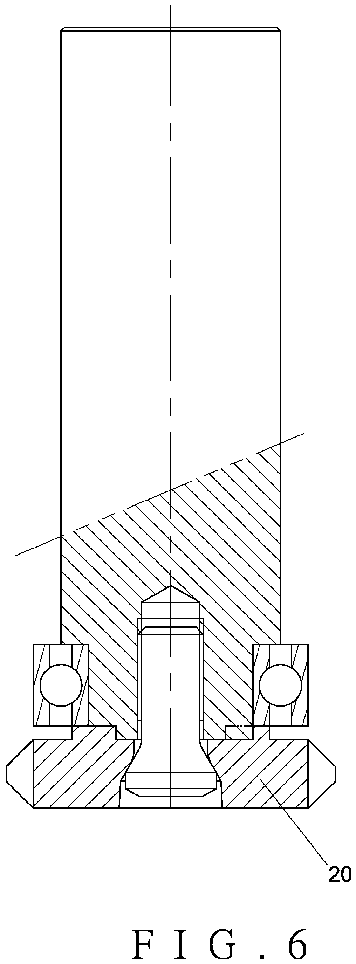

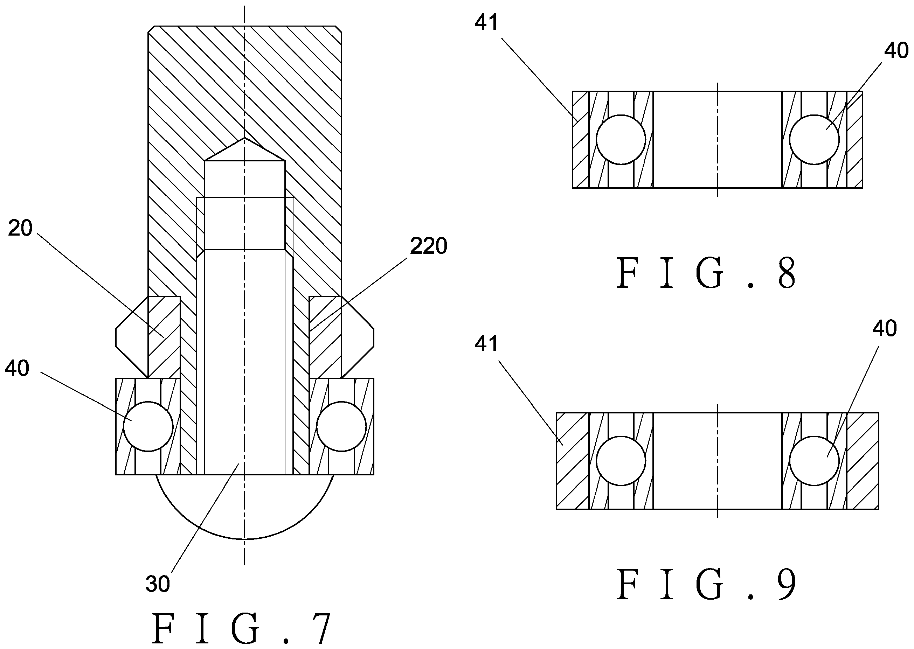

The indexable bit 20 has its one end provided with a positioning hole 22. The positioning hole 22 is configured to engage with the core 14 at the front end of the tool holder 10. At the other end of the indexable bit 20, there is a countersunk hole 23 for receiving a screw bolt 30. In the present embodiment, the indexable bit 20 is a side mill. In the embodiment of FIG. 6, the indexable bit 20 is a chamfer mill for chamfering workpieces. As shown in FIG. 7, the edge following wheel 40 and the indexable bit 20 are positionally interchangeable. Therein, the countersunk hole of the indexable bit 20 is a through hole 220 reaching the upmost position when assembled, and the screw bolt 30 for fastening the edge following wheel 40 is not a countersunk screw, but a screw bolt 30 having a flange.

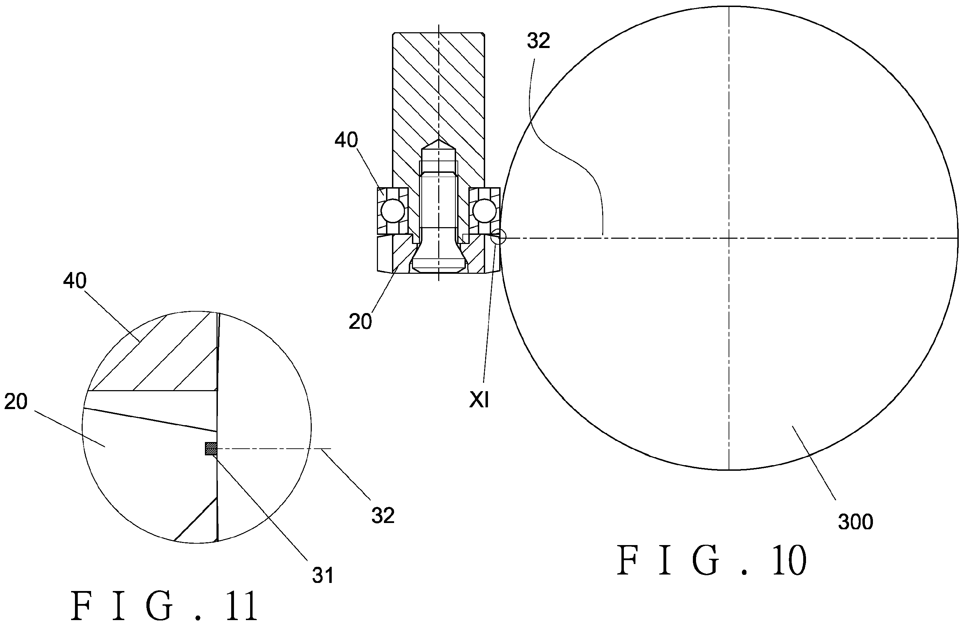

The edge following wheel 40 may be a bearing or a ring that is configured to roll when moving along the profile of a cast or a workpiece, and thereby leads the indexable bit 20 to perform milling along the outline of the cast or the workpiece. Additionally, the edge following wheel 40 may be peripherally mounted with a bushing 41 having various levels of thickness, as shown in FIGs. 8 and 9. When mounted around the edge following wheel 40, the bushing 41 changes the interval between the indexable bit 20 and the cast 300 (as shown in FIG. 10), so as to work with different casts or workpieces.

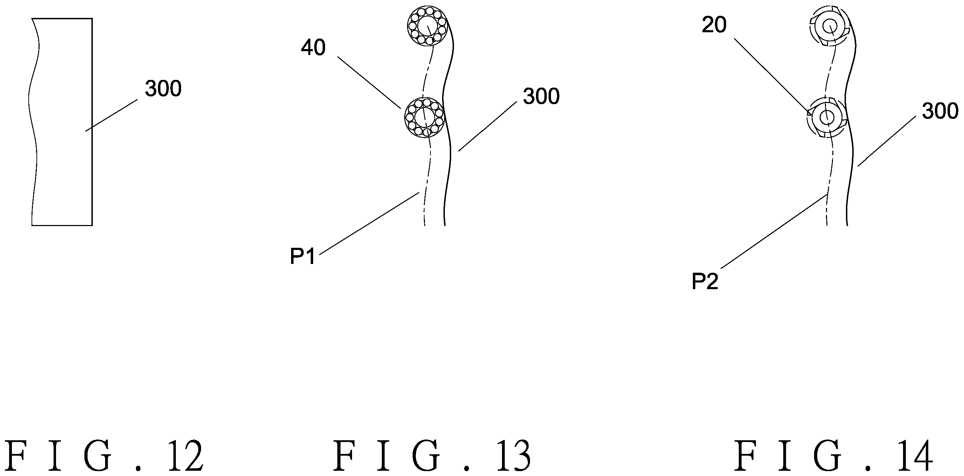

In the embodiment shown in FIGs. 10 and 11, the present invention is used to mill burrs. The cast 300 herein has a burr 31 at the parting line 32. When the present invention approaches the cast 300, the edge following wheel 40 abuts against the cast 300, and the indexable bit 20 uses its blade to remove the burr 31 along the parting line 32. Referring to FIG. 12, where the cast 300 has a non-linear outline, such as a curved outline, the indexable bit 20 maybe held by a robotic arm that controls lateral fine tuning (an elastic runout about 0.5∼1mm). The tool path programmed in the machine tool can often have slight deviation from the actual outline of the cast 300. For addressing this, following the profile of the cast 300 by the edge following wheel 40 and the foregoing lateral fine tuning jointly ensure an accurate guide path P1 (as shown in FIG. 13), so that the blade of the indexable bit 20 can move exactly along the parting line 32 to remove the burr 31. This means the milling path P2 of the indexable bit 20 (as shown in FIG. 14) shall coincide with the guide path PI, thereby precisely removing the burr 31.

Referring to FIGs. 8, 9 and 13, for casts 300 different in curvature, bushings 41 different in thickness have to be mounted around the edge following wheel 40 to change the interval between the indexable bit 20 and the casts 300, so as to prevent over-cutting and provide applicability to casts 300 or workpiece having different curvatures.

Referring to FIGs. 6 and 15, in the present embodiment, the indexable bit 20 is a chamfer mill. When the present invention is used to chamfer an object with a wavy outline, with the foregoing lateral fine tuning, even the profile of the workpiece is slightly different from the path programmed in the machine tool, the milling path of the present invention can precisely chamfer the workpiece with consistent width, without over-cutting or interrupted cutting.

With the configuration described above, the combination of the tool holder and the indexable bit in the present invention provides improved stability and rigidity thanks to the dual positioning formed by the first positioning function raised from the plug-socket like connection between the positioning shaft of the tool holder and the positioning hole of the indexable bit, and the second positioning function raised from the embracing and curved surface contact between the braking block and the braking notch, in addition to the conventional screw fastening. Such a structure is first disclosed by the present invention and has not been seen in like products. During fabrication, the improved processing procedure prevents excessive limit and excessive positioning, and since the shear strength and the transmissible torque are increased to 1.257 times and 1.257 times, respectively, the present invention eliminates the problems about excessive machining and excessive positioning as seen in the prior art. In addition, the present invention replaces polishing with milling, thereby reducing contamination in the working environment, and being suitable for both large- and small-scale production. The edge following wheel rolls along the profile of the cast or workpiece to the tool is working on, so the indexable bit is led to move along the parting line on the cast or workpiece to trim burrs, making the present invention practical and inventive.

## Claims

1. An indexable mill, comprising:
a tool holder (10), having one end thereof provided with a positioning shaft (11), wherein the positioning shaft (11) has one side thereof provided with a braking block (12), and the positioning shaft (11) is centrally formed with a threaded hole (13); and
an indexable bit (20) is centrally provided with a positioning hole (22) and a through hole (220), the positioning hole (22) being configured to receive the positioning shaft (11), the positioning hole (22) of the indexable bit (20) having one side thereof formed with a gap, the gap forming a braking notch (24), the braking block (12) and the braking notch (24) being in plug-socket like connection, and the through hole (220) being configured to receive a screw bolt (30) that fixes the indexable bit (20) to the tool holder (10).

2. The indexable mill of claim 1, wherein the tool holder (10) has the end thereof provided with a core (14), and the positioning shaft (11) is deposited on the core (14), in which the core (14) is configured to be inserted into an edge following wheel (40) and the indexable bit (20), and the screw bolt (30) fixes the core (14).

3. The indexable mill of claim 2, wherein the screw bolt (30) is a countersunk screw, and the through hole (220) is a countersunk hole (23) configured to receive the countersunk screw.

4. The indexable mill of claim 2, wherein the screw bolt (30) has a flange to retain the edge following wheel (40).

5. The indexable mill of claim 1, wherein the braking block (12) has two sides thereof formed as curved mortises (121), and the braking notch (24) has two sides thereof formed as curved tenons (241), so that the curved mortises (121) embrace and limit the tenons (241).
